(19) Europäisches Patentamt
European Patent Office
Office européen des brevets

(11) **EP 4 214 909 B1**

(12) **EUROPEAN PATENT SPECIFICATION**

(45) Date of publication and mention
of the grant of the patent:
**22.04.2026 Bulletin 2026/17**

(21) Application number: **20789050.0**

(22) Date of filing: **07.10.2020**

(51) International Patent Classification (IPC):
***H04L 41/0631*** *(2022.01)*

(52) Cooperative Patent Classification (CPC):
**H04L 41/064**

(86) International application number:
**PCT/EP2020/078029**

(87) International publication number:
**WO 2022/073591 (14.04.2022 Gazette 2022/15)**

(54) **METHOD AND APPARATUS FOR IDENTIFYING ROOT CAUSES OF AN ANOMALOUS INCIDENT**

VERFAHREN UND VORRICHTUNG ZUR IDENTIFIZIERUNG DER GRUNDURSACHEN EINES ANOMALEN VORFALLS

PROCÉDÉ ET APPAREIL D'IDENTIFICATION DE CAUSES PROFONDES D'UN INCIDENT ANORMAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.07.2023 Bulletin 2023/30**

(73) Proprietor: **Huawei Technologies Co., Ltd.**
**Shenzhen, Guangdong 518129 (CN)**

(72) Inventors:
• **SEHILI, Mohamed El Amine**
**80992 Munich (DE)**
• **BUI, Thanh Minh**
**80992 Munich (DE)**
• **LUO, Enliang**
**80992 Munich (DE)**
• **ZHANG, Zonghua**
**80992 Munich (DE)**
• **HOANG, Thai, V**
**80992 Munich (DE)**

(74) Representative: **Gill Jennings & Every LLP**
**The Broadgate Tower**
**20 Primrose Street**
**London EC2A 2ES (GB)**

(56) References cited:
**US-A1- 2016 320 768       US-A1- 2019 356 533**

• **CHENLEI GUO ET AL: "Spatio-temporal Saliency detection using phase spectrum of quaternion fourier transform", COMPUTER VISION AND PATTERN RECOGNITION, 2008. CVPR 2008. IEEE CONFERENCE ON, IEEE, PISCATAWAY, NJ, USA, 23 June 2008 (2008-06-23), pages 1 - 8, XP031297273, ISBN: 978-1-4244-2242-5**
• **SU YA ET AL: "CoFlux: Robustly Correlating KPIs by Fluctuations for Service Troubleshooting", 2019 IEEE/ACM 27TH INTERNATIONAL SYMPOSIUM ON QUALITY OF SERVICE (IWQOS), ACM, 24 June 2019 (2019-06-24), pages 1 - 10, XP033757318, DOI: 10.1145/3326285.3329048**
• **BAI XIAOLONG ET AL: "Saliency-Based Defect Detection in Industrial Images by Using Phase Spectrum", IEEE TRANSACTIONS ON INDUSTRIAL INFORMATICS, IEEE SERVICE CENTER, NEW YORK, NY, US, vol. 10, no. 4, 30 November 2014 (2014-11-30), pages 2135 - 2145, XP011563681, ISSN: 1551-3203, [retrieved on 20141104], DOI: 10.1109/TII.2014.2359416**

**Description**

**TECHNICAL FIELD**

The present application relates to root cause analysis, and more particularly to a method and an apparatus for identifying one or more root causes of an anomalous incident associated with a primary key performance indicator.

**BACKGROUND**

Computer control of complex machinery and systems is nowadays ubiquitous. Users of computer controlled machinery and systems (hereinafter simplified to "computer controlled systems") are familiar with receiving error messages, and are familiar with the sometimes difficult task of identifying the underlying cause of a received error message. As the complexity of computer controlled systems increases, particularly with the nesting of systems and the multitasking of components and subsystems, the problem of identifying the root cause of anomalous behaviour increases exponentially.

Many types of complex systems use a system of performance indicators as a means of monitoring system performance. The more important of these performance indicators are often referred to as key performance indicators (KPI). In complex systems, it is common for there to be a hierarchy of KPIs. In a manufacturing or processing context, the highest level KPIs may relate to the overall performance of a facility, such as output volume, input volumes (energy, water, raw materials, etc.), and anomalies in these KPIs are indicative of one or more anomalies with the processes, systems, or equipment of the facility. Each of the processes, systems, and items of equipment will typically have its own KPI based on monitoring or measurement, periodically or continuously, and there may be a hierarchy of KPIs within any process, system or machinery. It will be appreciated that an anomaly at a low level in the hierarchy of KPIs may give rise to anomalies in multiple higher level KPIs, and the knock on effects of an anomaly at a low level in a hierarchy may cause further anomalies which in turn give rise to other anomalies. The result, even in only moderately complex systems, is that a low-level fault may give rise to so many higher level anomalies that it becomes extremely difficult to identify the root cause of a raft of KPI anomalies. With systems as complex as telecommunication core networks, identification of the KPI directly associated with the root cause of a higher level anomaly becomes extremely difficult and hence extremely time consuming.

A telecommunication core network supports numerous services, each having associated KPIs, and is made up of a large number subsystems and heterogeneous network elements, with each subsystems and element in turn typically including a large set of KPIs. Similarly, managing the performance of telecommunications systems such as an IP based Multimedia Subsytem (IMS) network is generally critically dependent on monitoring KPIs. For example, performance evaluation of SIP (Session Initiation Protocol) metrics may be key to managing multimedia service such as Video on Demand (VoD), Voice over IP (VoIP), or Voice over LTE (VoLTE).

A KPI may be classified either as a primary KPI or a secondary KPI, primary KPIs relating to higher levels of a system, and secondary KPIs relating to lower levels of the system, the lower levels supporting the higher levels. When an anomaly is detected in a particular primary KPI, identifying the most relevant secondary KPIs that correlate with the primary KPI is extremely important for root cause analysis.

Primary KPIs may also be referred to as business KPIs because they may relate to a high level measure of network (and hence network operator) performance. For example, third party registration success rate, initial registration success rate, session setup time (mean), call completion rate, etc. Lower level KPIs may be known as secondary KPIs, and at least some secondary KPIs may be referred to as error code KPIs. Error code KPIs are usually the result of aggregating error information from system logs, i.e. the number of certain types of pre-defined errors happening per time interval. For example, they can be "number of 401 messages sent", number of "received 420, unrecognised extension" messages received. Root cause analysis is a problem-solving method that is used to identify root causes of faults and/or problems (more generally "anomalies") to enable the faults and/or problems to be rectified and to help prevent their reoccurrence.

Existing approaches for root cause analysis are time-consuming, error prone and are unsuitable for large scale KPI analytics, such as for telecommunication core networks.

Therefore, there arises a need to address the aforementioned technical drawbacks in existing technologies in identifying one or more root causes of an anomalous incident.

US 2016/0320768 A1 discloses a computer system and method for causality analysis using hybrid first-principles and inferential model.

CHENLEI GUO ET AL: "Spatio-temporal Saliency detection using phase spectrum of quaternion fourier transform", COMPUTER VISION AND PATTERN RECOGNITION, 2008. CVPR 2008. IEEE CONFERENCE ON, IEEE, PISCATAWAY, NJ, USA, 23 June 2008, pages 1-8 proposes that it is the phase spectrum, not the amplitude spectrum, of the Fourier transform that is the key in obtaining the location of salient areas.

**EP 4 214 909 B1**

## SUMMARY

It is an object of the present disclosure to provide a method and an apparatus for identifying one or more root cause Key Performance Indicators, KPIs, of an anomalous incident efficiently so that remedial action can be taken to resolve the anomalous incident.

This object is achieved by features of the independent claims. Further implementation forms are apparent from the dependent claims, the description, and the figures.

The present disclosure provides a method and an apparatus for identifying one or more root causes of an anomalous incident associated with a Key Performance Indicator (KPI).

According to a first aspect, there is provided a method for identifying one or more root causes of an anomalous incident in a system, the anomalous incident being associated with a primary Key Performance Indicator, KPI, the method comprising:

>    selecting a plurality of time sequences of secondary KPIs of the system;
>    calculating, by a processor, a spectral saliency of a time sequence of the primary KPI and of each secondary KPI time sequence;
>    calculating, by a processor, based on the spectral saliencies, similarities between the time sequence of the primary KPI and each secondary KPI time sequence; and
>    selecting one or more secondary KPIs having greatest similarity to the primary KPI as root cause KPIs. The method of the first aspect provides an efficient technique for identifying one or more root cause KPIs relevant to the anomalous incident in the system.

In a first possible implementation form of the method of the first aspect, the spectral saliency of each KPI time sequence is calculated by initially applying a discrete Fourier Transform to time series data of the respective KPI to generate a phase spectrum P(f) and then calculating an inverse discrete Fourier transform of the phase spectrum. The usage of the phase spectrum instead of an amplitude spectrum for generating a saliency map saves computational overhead by about one third.

In a second possible implementation form of the method of the first possible implementation form, the method includes applying a linear transformation to each KPI time series so that start and end values of that KPI time series are equal before calculating the discrete Fourier transform of that time series. Spectral leakage errors occur when a signal that is measured is not periodic. The linear transformation may be applied to close boundary gaps while maintaining patterns of anomalies that may exist. The linear transformation helps prevent spectral leakage in the calculation of the spectral saliency of KPIs. This significantly improves the robustness of the spectral saliency and enhances the capability to handle the KPI variation in seasonality, trend and the like.

In a third possible implementation form of the method of the second possible implementation form, the method includes adding extra data points to conclude each time sequence and creating an extended time sequence, prior to applying the linear transformation to the time series data of the extended time sequence. When anomalous points occur at the end of the time sequence, the linear transformation by itself may not solve the spectral leakage problem completely. However, adding extra data points improves spectral leakage performance.

In a fourth possible implementation form of the method, the extra data points of the third possible implementation form are estimated based on the gradient of the last portion of the time sequence to form the extended time sequence.

In a fifth possible implementation form of the method of the third possible implementation form, the extra data points are estimated based on a gradient of the last portion of the time sequence to form the extended time sequence in which the extra data points form a smooth continuation of the time sequence as it was before the extra data points were added.

In a sixth possible implementation form of the method of the first aspect as such or according to any of the preceding implementation forms, in selecting the plurality of secondary KPIs, secondary KPIs of low amplitude may be discarded.

In a seventh possible implementation form of the method of the first aspect as such or according to any of the preceding implementation forms, the similarities between the primary KPI time sequence and each of the secondary KPI time sequences are calculated using a time-lagged cross-correlation. The time-lagged cross-correlation enables the more accurate identification of the most relevant secondary KPIs for the primary KPI.

In an eighth possible implementation form of the method according to the first aspect as such or according to any of the preceding implementation forms, the method may be repeated for one or more different primary KPIs. The method may be repeated for the one or more different primary KPIs to identify the one or more root causes that lead to the anomalous incident more accurately.

In a ninth possible implementation form of the method of the first aspect as such or according to any of the preceding implementation forms, the method is applied to a communication system or to a system of computing devices.

In a tenth possible implementation form of the method of the first aspect as such or according to any of the preceding implementation forms, the method is applied to an industrial system. The industrial system may identify data points, events, and/or observations that deviate from normal behaviour.

According to a second aspect, there is provided an apparatus for identifying a root cause Key Performance Indicator, KPI, of an anomalous incident, the apparatus comprising:

one or more processors; and
one or more computer-readable storage devices having stored thereon computer-executable instructions that are executable by the one or more processors and that cause the system to:

identify a root cause of an anomalous incident, the anomalous incident being associated with a primary KPI;
select, a plurality of time sequences of secondary KPIs of the network;
calculate a spectral saliency of the time sequence of the primary KPI and of each secondary KPI time sequence;
calculate, based on the spectral saliencies, similarities between the time sequence of the primary KPI and each secondary KPI time sequence; and
select the one or more secondary KPIs having greatest similarity to the primary KPI as root cause KPIs.

The apparatus of the second aspect provides an efficient technique for identifying one or more root cause KPIs relevant to the anomalous incident in the system.

In a first possible implementation form of the apparatus according to the second aspect, the apparatus calculates the spectral saliency of each KPI time sequence by initially applying a discrete Fourier Transform to time series data of the respective KPI to generate a phase spectrum $P(f)$ and then calculating an inverse discrete Fourier transform of the phase spectrum. The usage of the phase spectrum instead of an amplitude spectrum for generating the saliency map saves computational overhead by about one third.

In a second possible implementation form of the first possible implementation form of the second aspect, the instructions cause the apparatus to apply a linear transformation to each KPI time series before calculating the forward discrete Fourier transform of the time series. The linear transformation may be applied to close boundary gaps while maintaining patterns of anomalies that may exist. The linear transformation helps prevent spectral leakage in the calculation of the spectral saliency of KPIs. This significantly improves the robustness of the spectral saliency and enhances the capability to handle the KPIs variation in seasonality, trend and the like.

In a third possible implementation form of the second possible implementation form of the second aspect, the instructions cause the apparatus to add extra data points to conclude each time sequence and to create an extended time sequence, prior to applying the linear transformation to the time series data of the extended time sequence. When the anomalous points occur at the end of the sequence, the linear transformation may not solve the spectral leakage problem completely, as the value of a last anomalous point is included in a linear transformation formula.

In a fourth possible implementation form according to the third possible implementation form of the second aspect, the instructions cause the apparatus to base the extra data points on an estimation based on a gradient of a last portion of the time sequence to form the extended time sequence in which the extra data points form a smooth continuation of the time sequence as it was before the extra data points were added. This approach further improves the performance of the apparatus by enabling clearer identification of root cause KPIs.

In a fifth possible implementation form of the second aspect as such or according to any of the preceding implementation forms of the second aspect, the instructions cause the apparatus when selecting the plurality of secondary KPIs, to discard secondary KPIs of low amplitude.

In a sixth possible implementation form of the second aspect as such or according to any of the preceding implementation forms of the second aspect, the instructions cause the apparatus to calculate the similarities between the primary KPI and each of the secondary KPIs using a time-lagged cross-correlation. The time-lagged cross-correlation enables the more accurate identification of the most relevant secondary KPIs for the primary KPI.

According to a third aspect, there is provided a computer program for identifying a root cause Key Performance Indicator, KPI, of an anomalous incident in a system, the anomalous incident being associated with a primary KPI, the computer program comprising:
one or more non-transitory computer-readable storage devices and a plurality of program instructions stored on at least one of the one or more computer-readable storage devices, the plurality of program instructions comprising:

program instructions to select a plurality of time sequences of secondary KPIs of the system;
program instructions to calculate, by a processor, a spectral saliency of a time sequence of the primary KPI and of the time sequences of each secondary KPI;
program instructions to calculate, by a processor, based on the spectral saliencies, similarities between the time sequence of the primary KPI and each secondary KPI time sequence; and

program instructions to select one or more secondary KPIs having greatest similarity to the primary KPI as root cause KPIs.

According to a fourth aspect, there is provided a non-transitory computer-readable medium storing executable instructions for identifying one or more root cause Key Performance Indicators, KPIs, of an anomalous incident in a system, the anomalous incident being associated with a primary Key Performance Indicator, KPI, wherein the executable instruction, when executed by a processor, cause the processor to:

select a plurality of time sequences of secondary KPIs of the system;
calculate a spectral saliency of a time sequence of the primary KPI and of each secondary KPI time sequence;
calculate, based on the spectral saliencies, similarities between the time sequence of the primary KPI and each secondary KPI time sequence; and
select one or more secondary KPIs having greatest similarity to the primary KPI as root cause KPIs.

The present disclosure provides the method, the apparatus, the computer program and the non-transitory computer-readable medium that enable the identification of one or more root causes of an anomalous incident quickly, accurately, and efficiently by correlating the anomalous primary KPI with the most relevant secondary KPIs. The method, the apparatus, the computer program and the non-transitory computer-readable medium can be used in manufacturing and industrial processes, Information technology (IT), telecommunications core networks, and/or in accident analysis. In the manufacturing and industrial processes, quality may be controlled, in the IT, security management may be controlled, and in the accident analysis, a cause of an accident and further accidents on the same cause may be controlled.

A technical problem in the prior art is resolved, where the technical problem is that the anomaly detection algorithms are extremely computationally-expensive and time-consuming for each KPI that largely varies in time series characteristics and performance of the anomaly detection algorithms heavily impact final correlation results. Another technical problem in the prior art is resolved, where the technical problem is that the systems correlate the multiple KPIs based on their time series data directly that are time-consuming, error prone and require sophisticated experience and expertise for the domain experts, and also not for the telecommunication core networks.

Therefore, compared with the prior art, according to the method, the apparatus, the computer program and the non-transitory computer-readable medium for identifying the one or more root causes provided in the present disclosure improve the robustness of the spectral saliency by using linear transformation and also prevent the spectral leakage on the calculated spectral saliency. The one or more secondary KPIs with greatest similarity to the primary KPI are selected efficiently by correlating the anomalous primary KPI with the most relevant secondary KPIs.

These and other aspects of the present disclosure will be apparent from and the embodiment(s) described below.

## BRIEF DESCRIPTION OF DRAWINGS

To illustrate the technical solutions in the embodiments of the present disclosure or the prior art more clearly, the following briefly introduces the accompanying drawings required for describing the embodiments of the prior art. The accompanying drawings in the following description show merely some embodiments of the present disclosure, and a person of ordinary skill in the art may still derive other drawings from these accompanying drawings without creative effort.

FIG. 1 is a block diagram of an apparatus for identifying one or more root causes of an anomalous incident in accordance with an embodiment of the present disclosure;

FIG. 2 illustrates an anomalous Key Performance Indicator (KPI) correlation pipeline in accordance with an embodiment of the present disclosure;

FIG. 3A is a graphical representation of an original KPI time sequence;

FIG. 3B is a graphical representation of a saliency map of the original KPI of Fig. 3A in accordance with an embodiment of the present disclosure;

FIG. 4A and 4B illustrates schematically a source of a spectral leakage problem that can give rise to artefacts in a reconstructed signal after applying forward and inverse discrete Fourier Transforms on a sequence;

FIGS. 5A and 5B represents an original sequence and a saliency map of the original sequence;

FIGS. 5C and 5D contrast with FIGS. 5A and 5B, and represent an effect of applying a linear transformation to the original sequence of FIG. 5A and the corresponding saliency map of a transformed sequence;

FIGS. 6A-6D illustrate graphical representations of example sequences and respective saliency maps when an anomalous point happens at the end of an example sequence;

FIGS. 6E-6H correspond to the FIGS. 6A-6D, but show the consequences of an anomalous dip (rather than an anomalous spike) at the end of the original sequence;

FIGS. 7A-7I show the results obtained from the proposed correlation pipeline to identify secondary (e.g. error code) KPIs that are related to an anomaly in a primary (e.g. business) KPI; and

FIGS. 8A and 8B represent a flow diagram of a method for identifying one or more root causes of an anomalous incident in accordance with an embodiment of the present disclosure.

## DETAILED DESCRIPTION

Embodiments of the present disclosure provide a method and an apparatus for identifying one or more root causes of an anomalous incident in a system.

To make the solutions of the present disclosure more comprehensible for a person skilled in the art, the following clearly and completely describes the technical solutions in the embodiments of the present disclosure with reference to the accompanying drawings in the embodiments of the present disclosure. The described embodiments are merely a part rather than all of the embodiments of the present disclosure. All other embodiments obtained by a person of ordinary skill in the art based on the embodiments of the present disclosure without creative efforts shall fall within the protection scope of the present disclosure.

In order to help understand embodiments of the present disclosure, several terms that will be introduced in the description of the embodiments of the present disclosure are defined herein first.

Terms such as "a first", "a second", "a third", and "a fourth" (if any) in the summary, claims, and the accompanying drawings of the present disclosure are used to distinguish between similar objects and are not necessarily used to describe a specific sequence or order. It should be understood that the terms so used are interchangeable under appropriate circumstances, so that the embodiments of the present disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units, but may include other steps or units that are not expressly listed or that are inherent to such process, method, product, or device.

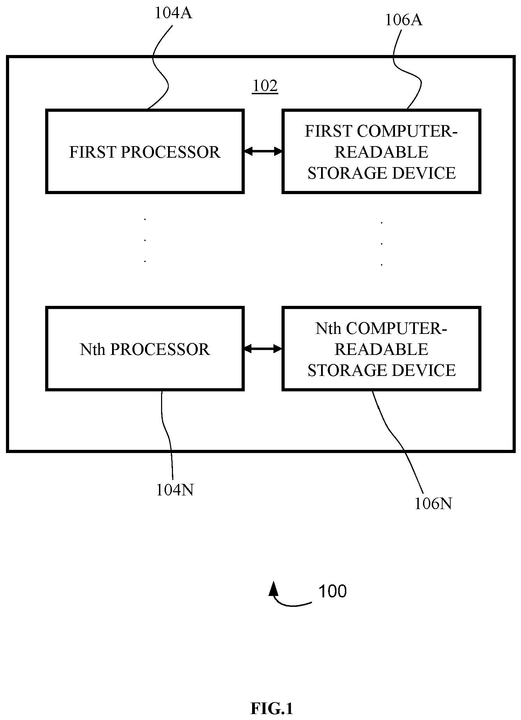

FIG. 1 is a block diagram **100** of an apparatus **102** for identifying one or more root causes of an anomalous incident in accordance with an embodiment of the present disclosure. The apparatus **102** includes one or more processors **104A-N** and one or more computer-readable storage devices **106A-N.** The one or more computer-readable storage devices **106A-N** store computer-executable instructions that are executable by the one or more processors **104A-N.** The one or more processors **104A-N** are configured to identify a root cause of the anomalous incident associated with a primary KPI. The one or more processors **104A-N** select a plurality of time sequences of secondary KPIs of a network. The one or more processors **104A-N** calculate a spectral saliency of a time sequence of the primary KPI and of each secondary KPI time sequence. The spectral saliency may be a detection of an artefact based on saliency of the artefact in the time sequence. The one or more processors **104A-N** calculate similarities between the time sequence of the primary KPI and each secondary KPI time sequence based on the spectral saliencies. The one or more processors **104A-N** select one or more secondary KPIs having greatest similarity to the primary KPI as root cause KPIs.

The one or more root causes are identified quickly, accurately, and efficiently by correlating the anomalous primary KPI with the most relevant secondary KPIs, regardless of their time series characteristics. The correlation of the anomalous primary KPI with the most relevant secondary KPIs along with their occurrence order and fluctuation direction facilitates the root cause analysis.

The anomalous incident is associated with the primary Key Performance Indicator (KPI), and the apparatus is used to identify the secondary KPIs that may be the root cause KPIs. The primary KPI may be a business KPI, and the secondary KPIs may be error code KPIs. The plurality of time sequences may include seasonal time sequences.

The spectral saliency may use phase information to represent KPI fluctuation occurrence and direction, and time-lagged cross-correlation to identify most relevant secondary KPIs for the primary KPI. The apparatus 102 may include a mechanism to reflect the fluctuation direction for positive correlation and/or negative correlation. The apparatus 102 does not rely on time series models for fluctuation feature extraction. The apparatus **102** may also use the spectral saliency for anomalous KPI correlation. The apparatus **102** is KPI feature agnostic, and has extremely fast computation. The apparatus **102** further eliminates the need for training a machine learning model, prediction, and is parameter-free. The apparatus **102** does not require the maintainability effort inherent to use of a machine learning model. The apparatus **102** eliminates the need for periodic re-training of the machine learning model due to change in data distribution. The apparatus **102** may be applied at a large scale essentially based on signal processing.

The apparatus **102** calculates the spectral saliency of each KPI by initially applying a discrete Fourier Transform to time series data of the respective KPI to generate a phase spectrum $P(f)$, and to then calculate an inverse discrete Fourier transform of the phase spectrum. The usage of the phase spectrum instead of an amplitude spectrum for generating a saliency map saves computational overhead by about one third.

The KPI time series data may be represented as a sequence x and to this is applied a forward discrete Fourier Transform to get the phase spectrum:

$$P(f) = phase\ (F(x))$$

from which the spectral saliency is calculated according to:

$$S(x) = ||F^{-1}[exp(iP(f))]||^2$$

where $F^{-1}$ represents the inverse discrete Fourier Transform,
and then defining $sign(F^{-1}[exp(iP(f)))) S(x)$ as the fluctuation feature or the saliency map of x in order to take into account the fluctuation direction. The fluctuation direction may include going upwards and/or going downwards.

In some embodiments, the apparatus **102** applies a linear transformation to each KPI time series so that start and end values of that KPI time series are equal before calculating the forward discrete Fourier transform of that time series.

In some embodiments, the apparatus **102** also adds extra data points to conclude each time sequence to create an extended time sequence, prior to applying the linear transformation to the time series data of the extended time sequence. The apparatus **102** bases the extra data points on an estimation based on a gradient of a last portion of the time sequence to form the extended time sequence in which the extra data points form a smooth continuation of the time sequence as it was before the extra data points were added. This approach further improves the performance of the apparatus by enabling clearer identification of the root cause KPIs. The extra data points may be estimated using average of gradients,

$$\overline{g} = \frac{1}{m}\sum_{i=1}^{m} g(x[n], x[n-i])$$

as, for example,

$$x[n+1] = x[n-m+1] + \overline{g},$$

where $g(x[i], x[j])$ is the gradient of a straight line between x[i] and x[j].

The apparatus **102** optionally calculates the similarities between the primary KPI and each of the secondary KPIs using a time-lagged cross-correlation. The time-lagged cross-correlation enables more accurate identification of the most relevant secondary KPIs for the primary KPI.

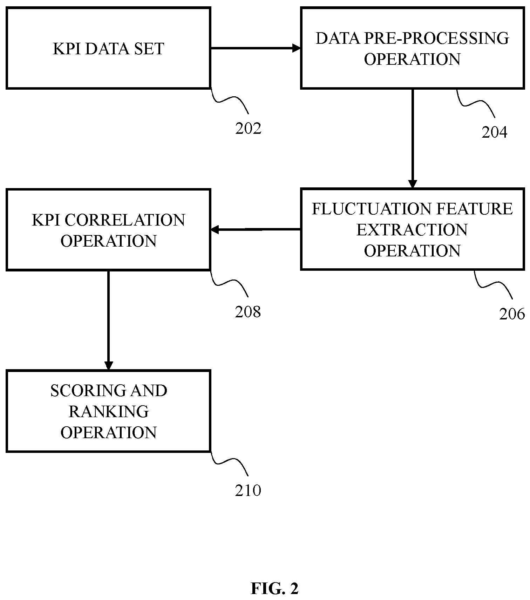

FIG. 2 illustrates an anomalous Key Performance Indicator (KPI) correlation pipeline in accordance with an embodiment of the present disclosure. A KPI data set 202, undergoes a data pre-processing operation **204,** followed by a fluctuation feature extraction operation **206**. Thereafter, KPIs are correlated with a KPI correlation operation **208,** and the correlated KPIs are then optionally scored and ranked with a scoring and ranking operation **210.**

Each KPI is provided as a set of time series data in the KPI data set **202** that includes one primary KPI (e.g. a high level KPI such as a business KPI) and multiple secondary KPIs (e.g. error code KPIs). There may be several, tens or hundreds of secondary KPIs (e.g. error code KPIs).

The data pre-processing operation **204** primarily handles data outliers and missing values. The fluctuation feature extraction operation **206** calculates a spectral saliency using a Phase Spectrum of Fourier Transform (PFT). The calculated spectral saliencies may be used as the fluctuation features of the KPIs. The KPI correlation operation **208** calculates the similarities between each pair of the KPIs using the spectral saliency of a pair of the KPIs using a similarity function. The pair of the KPIs may include a primary KPI (e.g. a business KPI) and one secondary KPI (e.g. an error code KPI). The similarity function may include a time-lagged cross-correlation function. The scoring and ranking operation **210** ranks the secondary KPIs in terms of their similarity with the primary KPI, and the top K (a user-defined count) are tagged as root cause KPIs of an anomalous incident.

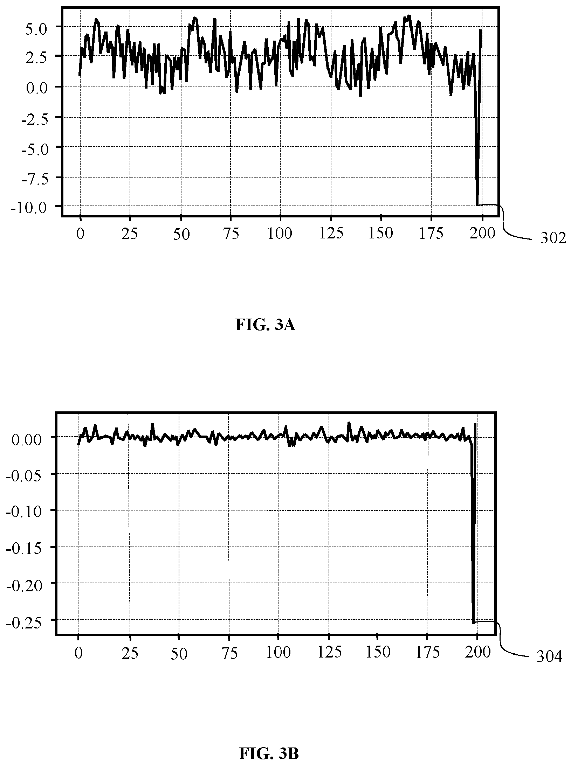

FIG. 3A is a graphical representation of an original KPI time sequence. A distinctly anomalous point **302** can be seen in the original KPI time sequence, the anomalous point **302** in the original KPI time sequence is clearly distinguishable from the low amplitude sinus signal and noise that represents the bulk of the original KPI time sequence.

FIG. 3B is a graphical representation of a saliency map of the original KPI of Figure 3A. The saliency map derived from the original KPI is calculated through a spectral saliency, the anomalous point in the original KPI is clearly represented by a strong dip **304** in the saliency map. Other variations in the original KPI, such as the low amplitude sinus signal and the noise are largely suppressed in the saliency map, so that the anomaly stands out very clearly.

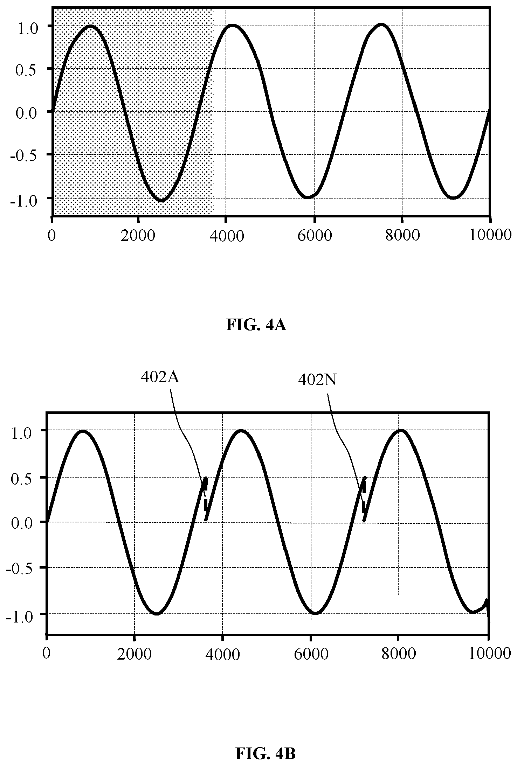

FIGs. 4A and 4B illustrate schematically a source of a spectral leakage problem that can give rise to artefacts in a reconstructed signal after applying forward and inverse discrete Fourier transforms on a sequence. The shaded region to the left of figure 4A represents a segment or a sub-sequence of a KPI sequence to which a forward discrete Fourier transform is to be applied. There is an implicit assumption in the Discrete Fourier Transform (DFT) that a sequence input into a forward DFT corresponds to one period of a periodic infinite sequence.

For a sequence $x[n]$ ($n \in [0, N-1]$), the forward DFT calculates $X[k]$ ($k \in [0, N-1]$) from $x[n]$ and the inverse DFT reconstructs $x[n]$ from $X[k]$.

The forward and inverse DFT formulas are:

$$X[k] = \sum_{n=0}^{N-1} x[n]e^{-j2\pi nk/N}, \quad k = 0, 1, \ldots, N-1$$

$$x[n] = \sum_{k=0}^{N-1} X[k]e^{j2\pi nk/N}$$

The right hand side of the inverse DFT equation is periodic with period N, the inverse DFT implicitly computes periodic repetitions of $x[n]$ outside the $[0, N-1]$ interval: $x[N] = x[0]$, $x[N+1] = x[1]$, .... $X[M] = x[M \bmod N]$. The periodic repetitions of the inverse DFT create boundary gaps in the extended sequence if $x[N] = x[0]$ is not a smooth continuation of $x[N-1]$ as illustrated in Figure 4B.

The FIG. 4B illustrates two boundary gaps **402A** and **402N** in the reconstructed signal after applying forward and inverse DFTs on the sequence.

The boundary gaps **402A-N** may generate spikes or dips at ends of the spectral saliency map of $x[n]$ ($n \in [0, N-1]$), and these may lead to false fluctuation representation at $x[0]$ and $x[N-1]$, and the results of the correlation based on the saliency maps may be incorrect. In particular, if an anomaly in a KPI time sequence is located at the end of the part of the KPI sequence that is processed, a spectral saliency feature (e.g. a spike or a dip) may be concealed by a possibly larger spectral saliency feature that is attributable to a boundary gap **402A.** So, although not always necessary, anomalies can more consistently be identified, even if they occur at the end of a sampled KPI time sequence by addressing the issue of spectral leakage. The issue of spectral leakage may be addressed by using a linear transformation to close boundary gaps **402A-N** while maintaining patterns of anomalies, if such anomalies exist.

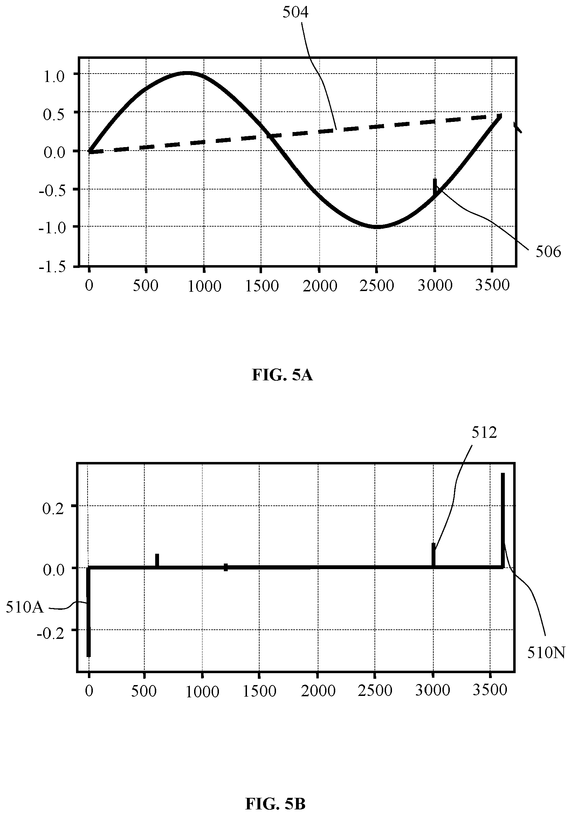

FIGS. 5A and 5B represent an original sequence and a saliency map of that original sequence. In FIG. 5A, the original sequence, shown as a solid line, includes an anomalous point **506**. A broken line **504** linking the start and end of the original sequence is here oblique, and this implies the existence of a boundary gap, and hence spectral leakage.

FIG. 5B illustrates the saliency map corresponding to the original sequence shown in FIG. 5A. The saliency map shows a dip **510A** at the start of the saliency map, and a spike **510N** at the tail of the saliency map, resulting from the boundary gap in the original sequence. The saliency map also includes a spike **512** corresponding to the anomalous point **506** in the original sequence. The artefacts attributable to the boundary gap in the original sequence may be larger (and hence appear more significant) than the spike **512** that corresponds to the anomalous point **506** of the original sequence.

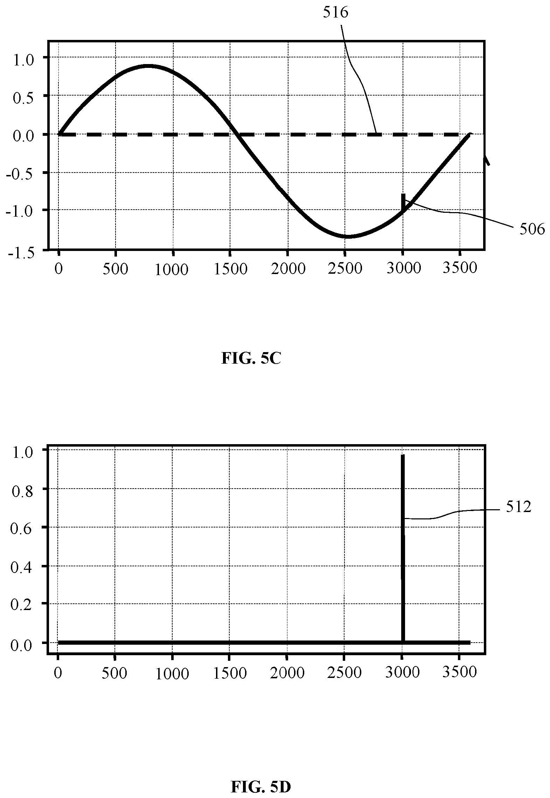

FIGS. 5C and 5D contrast with FIGS. 5A and 5B, and represent the effect of applying a linear transformation to the original sequence of FIG. 5A, and the corresponding saliency map of a transformed sequence. FIGS. 5C and 5D show that the boundary gaps can be closed while maintaining the patterns of anomalies.

An example of a suitable linear transformation to be applied to close the boundary gap in the original sequence is represented by the following formula:

$$y_2[n] = y_1[n] + \frac{n}{N}(y_1[0] - y_1[N-1]).$$

FIG. 5C illustrates the original sequence of FIG. 5A transformed by applying the linear transformation. It can be seen that in the transformed sequence the beginning and end of the sequence are at the same level, so that the broken line **516** connecting the beginning and end has the same y-axis value, meaning that there is no boundary gap, and hence no spectral leakage. The anomalous point **506** of the original sequence is substantially unaffected by the linear transformation.

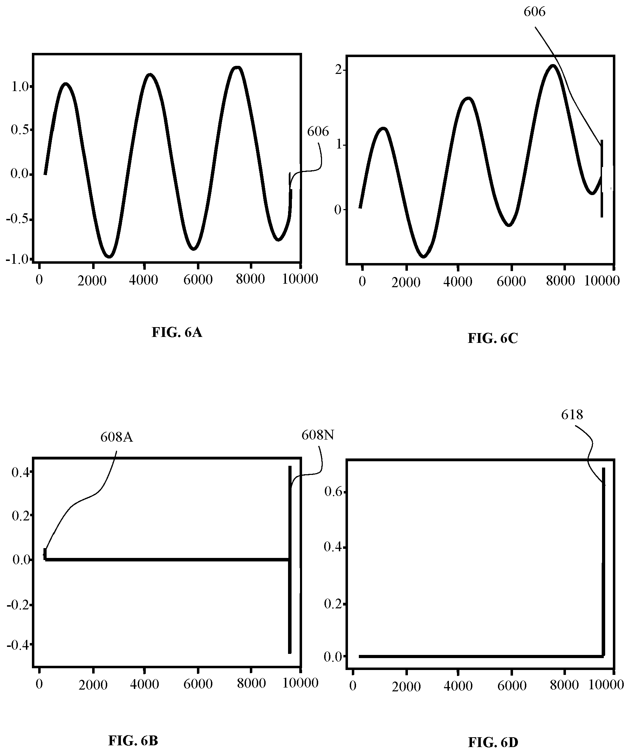

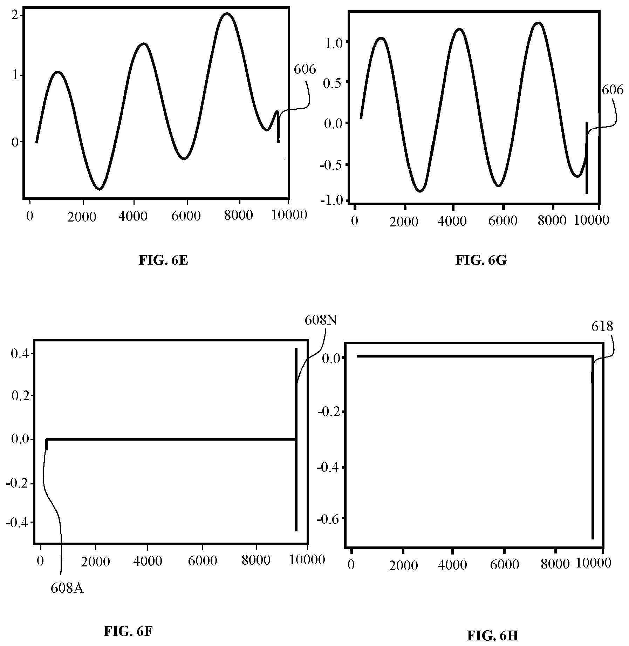

FIG. 5D illustrates the saliency map of the transformed sequence of FIG. 5C. It can be seen that the spectral saliency plot includes no artefacts attributable to the beginning or end of the original sequence, but includes a very significant feature (i.e. the spike) **512** corresponding to the original anomalous point **506** that includes fluctuation power. However, when the anomalous point **506** occurs at the end of a sequence, the above simple linear transformation may not solve the spectral leakage problem completely. This is because the value of the last anomalous point 506 is involved in the linear transformation formula, and this involvement distorts the anomalies after the linear transformation. We propose addressing this problem by appending k estimated data points to the end of the original sequence before applying the linear transformation. The issue and the effect of appending the k extra data points are illustrated in Figure 6.

FIGS. 6A-6D illustrate graphical representations of example sequences and respective saliency maps when an anomalous point **606** happens at the end of the example sequences.

FIG. 6A is a graphical representation that illustrates an original sequence of a signal. The graphical representation includes an anomalous point **606,** in this case a spike, at the end of the original sequence.

FIG. 6B illustrates a saliency map corresponding to the original sequence shown in FIG. 6A. It can be seen that an artefact **608A** occurs at the start of the saliency map, and that there is only a single discernible artefact **608N** at the end of the saliency map. The single discernible artefact **608N** is in fact attributable to both the anomalous point **606** and to spectral leakage from the end of the original sequence.

FIG. 6C illustrates a modified sequence that corresponds to the original sequence of FIG. 6A, with extra data points added to the original sequence with the anomalous point **606** before applying the linear transformation.

FIG. 6D is a saliency map derived from the modified sequence of FIG. 6C. Comparison with the corresponding saliency map of FIG. 6B for the unmodified sequence clearly shows that the saliency map includes only one artefact **618,** which is solely attributable to the anomalous point **606.** The extra data points may be estimated based on the gradient of the last portion of the original sequence to form an extended sequence.

FIGS. 6E-6H correspond to the FIGS. 6A-6D, but show the consequences of an anomalous dip (rather than an anomalous spike) at the end of the original sequence.

FIG. 6E is a graphical representation that illustrates an original sequence of a signal. The graphical representation includes an anomalous point **606,** in this case a dip, at the end of the sequence.

FIG. 6F illustrates a saliency map corresponding to the original sequence shown in FIG. 6E. It can be seen that an artefact **608A** occurs at the start of the saliency map, and that there is only a single discernible artefact **608N** at the end of the saliency map. The single discernible artefact **608N** is in fact attributable to both the anomalous point **606** and to spectral leakage from the end of the original sequence.

FIG. 6G illustrates a modified sequence that corresponds to the original sequence of FIG. 6E, with extra data points added to the original sequence with the anomalous point **606** before applying the linear transformation.

FIG. 6H is a saliency map derived from the modified sequence of FIG. 6G. Comparison with the corresponding saliency map of FIG. 6E for the unmodified sequence clearly shows that the saliency map includes only one artefact **618,** which is solely attributable to the anomalous point **606.** The extra data points may be estimated based on the gradient of the last portion of the original sequence to form the extended sequence.

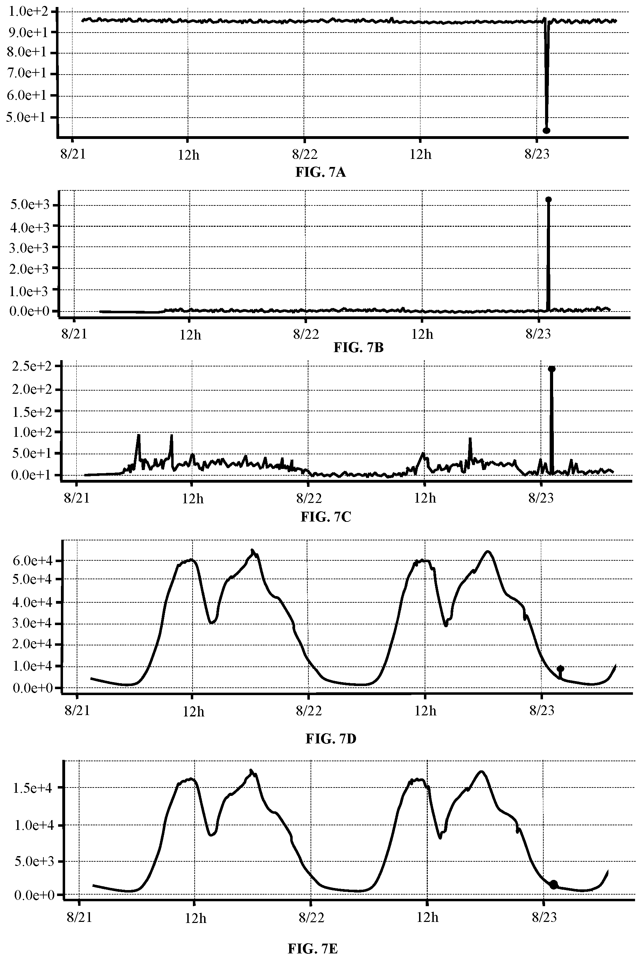

FIGS. 7A-7I show the results obtained from the proposed correlation pipeline to identify secondary (e.g. error code) KPIs that are related to an anomaly in a primary (e.g. business) KPI.

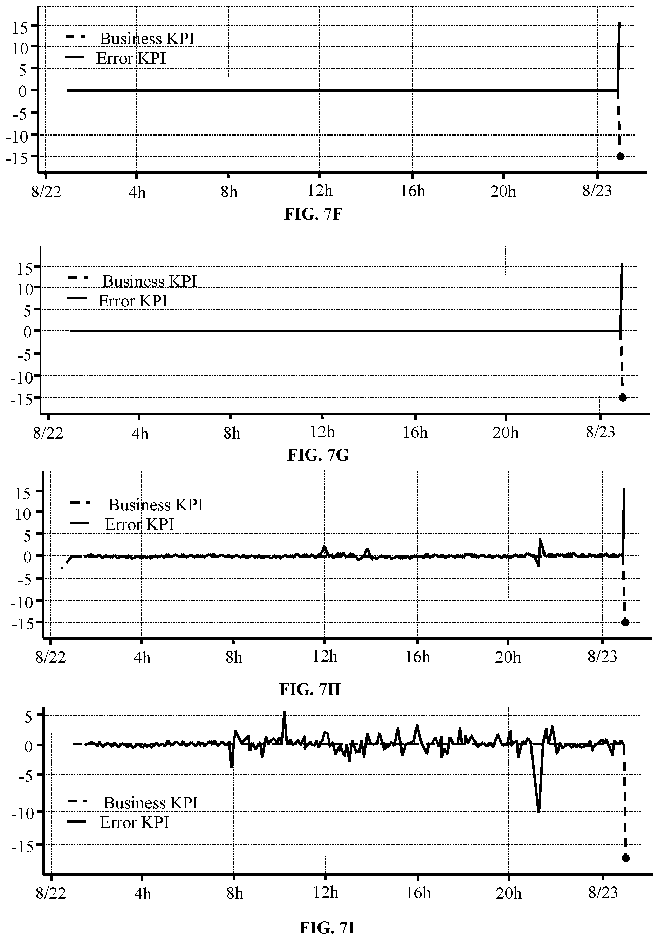

In the illustrated example, the correlation pipeline determines three correlated error code KPIs with very high absolute similarity scores (here, all > 0.95). Also in the example illustrated, the scores are negative due to the opposite fluctuation directions of anomalies in the primary KPI and the secondary KPIs. The fourth ranked secondary KPI, which does not contain an anomaly, has a very small score (~0.11). In many applications, the secondary KPIs, such as the error code KPIs, with low absolute similarity scores (<0.5 for example) may be considered uncorrelated with the primary KPI (e.g. a business KPI). The KPI time sequences for the primary and the secondary KPIs are shown in Figures 7A to 7E. While saliency maps of each pair of the primary KPI and a secondary KPI are shown in Figures 7F to 7I.

FIG. 7A illustrates a time sequence of a primary KPI (e.g. a business KPI) with an anomalous point. FIG. 7B to 7E each illustrate the time series data/time sequence of a secondary KPI (e.g. an error code KPI) with or without an anomalous point (7B-7D each has an anomalous point, 7E does not have), the secondary KPIs being ranked from top to bottom in FIGS. 7B to 7E based on their pair-wise similarity scores based on cross-correlation.

When the anomalous point exists in a KPI, the corresponding saliency map includes a strong spike (positive fluctuation) or a strong dip (negative fluctuation) at the corresponding position. In the examples shown in FIGS. 7A-E, this is the cases for the primary and top three ranked secondary KPIs.

FIG. 7B illustrates a time sequence of the secondary (e.g. error code) KPI that is top ranked based on similarity scores with the business KPI, calculated using cross correlation. The similarity score of the business KPI with the first error code KPI is -0.999999. This error code KPI is the top-ranked secondary (e.g. the error code) KPI because the absolute value of its similarity score with the business KPI is the highest. The similarity score is negative due to the opposite fluctuation direction of the primary (e.g. the business) KPI and the top-ranked secondary (e.g. the error code) KPI.

FIG. 7C illustrates a time sequence of the secondary (error code) KPI that is ranked second based on similarity scores with the primary (business) KPI calculated using cross correlation. The similarity score of the primary (business) KPI with the second-ranked secondary (error code) KPI is -0.999558.

FIG. 7D illustrates a time sequence of the secondary (e.g. error code) KPI that is ranked third based on the similarity scores with the primary (business) KPI calculated using cross correlation. The similarity score of the primary (business) KPI with the third-ranked secondary (error code) KPI is here -0.953075.

FIG. 7E illustrates a time sequence of the secondary (e.g. error code) KPI that is ranked fourth based on the similarity scores with the primary (business) KPI calculated using cross correlation. This secondary KPI does not include an anomalous point and has a very small similarity score, here approximately 0.11. This secondary KPIs is considered uncorrelated with the primary KPI because it has a low similarity score. Similarity scores of less than about 0.5 are considered low and hence uncorrelated.

FIG. 7F illustrates a saliency map for the pair comprising the primary (business) KPI (of FIG. 7A) and the top-ranked secondary (error code) KPI (of FIG. 7B).

FIG. 7G illustrates a saliency map of the pair comprising the primary (business) KPI (of FIG, 7A) and the second-ranked secondary (error code) KPI (of FIG. 7C).

FIG. 7H illustrates a saliency map of the pair comprising primary (business) KPI (of FIG. 7A) and the third-ranked secondary (error code) KPI (of FIG. 7D).

FIG. 7I illustrates a saliency map of the pair comprising the primary (business) KPI and the secondary (error code) KPI ranked fourth. It can be seen that the saliency map is noisy with no clear strong spike or strong dip, signifying a lack of correlation with the primary (business) KPI.

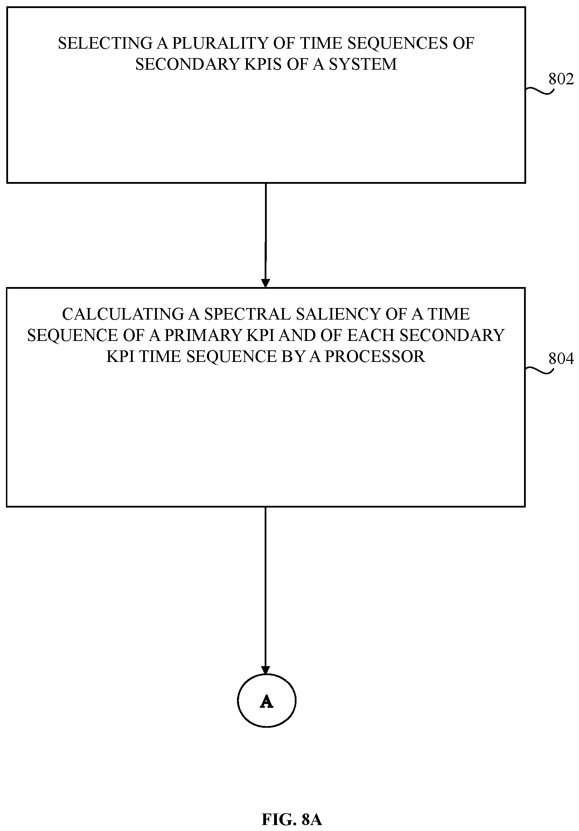

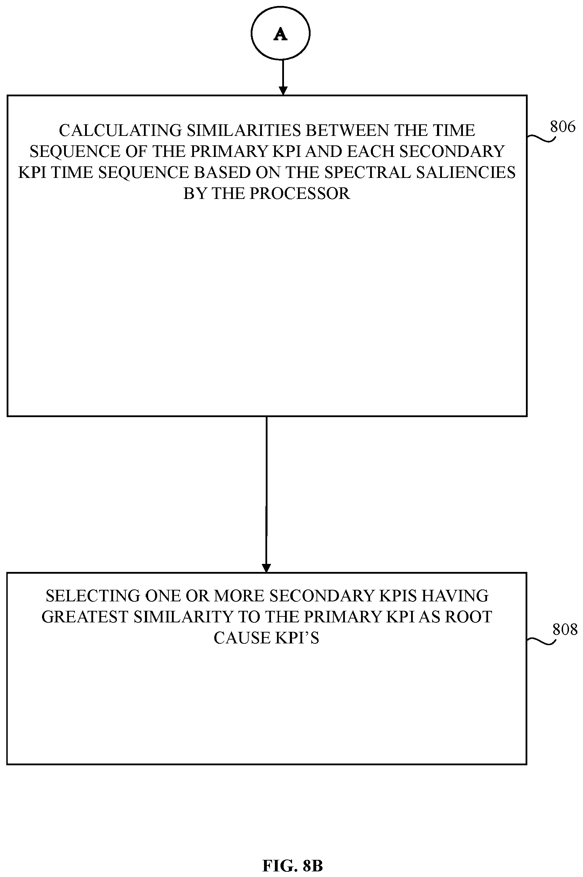

FIGS. 8A and 8B represent a flow diagram of a method for identifying one or more root causes of an anomalous incident in accordance with an embodiment of the present disclosure. At step **802**, a plurality of time sequences of secondary KPIs of a system are selected. At step **804**, the spectral saliency of a time sequence of a primary KPI and of each secondary KPI time sequence are calculated by a processor. At step **806**, similarities between the time sequence of the primary KPI and each secondary KPI time sequence are calculated by the processor based on the spectral saliencies. At step **808**, one or more secondary KPIs having greatest similarity to the primary KPI are selected as root cause KPIs.

A saliency map may be calculated using an approach such as that set out by the following Python implementation:

```
def spectral_saliency(ts, q=3, phase_only=False, keep_sign=False):
    """Calculate saliency map of an input time series using spectral data.
    Arguments:
        ts {np.ndarray} -- input time series
        phase_only {bool} -- whether to use phase information only for
            reconstruction (default: {False})
        keep_sign {bool} -- whether to keep sign of the residual
            signal (default: {False})
```

*Keyword Arguments:*

*q {int} -- window size for local averaging (default: {3})*

*Returns:*

*np.ndarray -- a time series of the same length as the input time series*

*References:*

*[1] X. Hou and L. Zhang, "Saliency Detection: A Spectral Residual*

*Approach," CVPR2007.*

*[2] C. Guo, Q. Ma, and L. Zhang, "Spatio-temporal saliency detection*

*using phase spectrum of quaternion fourier transform," CVPR2008.*

*[3] H. Ren et al., "Time-Series Anomaly Detection Service at*

*Microsoft," KDD2019.*

*"""*

*if len(ts.shape) != 1:*

*raise ValueError('`ts` must be a 1-D array')*

*if not isinstance(q, (int, np.integer)) or q <= 0:*

*raise ValueError('`q` must be a positive integer')*

*# FFT of input time series*

*ts_fft = np.fft.fft(ts)*

*# compute the phase spectrum*

*P = np.angle(ts_fft)*

*# return saliency map*

```
if phase_only:
    # see [2], use only the phase spectrum
    S = np.fft.ifft(np.exp(1j * P))
else:
    # calculate spectral residual R
    A = np.abs(ts_fft)
    L = np.log(A)
    AL = np.correlate(L, np.ones((q,)) / q, 'same')
    R = L - AL
    # see [1]
    S = np.fft.ifft(np.exp(R + 1j * P))
if keep_sign:
    # for correlation purpose
    return np.sign(S.real) * np.abs(S) ** 2
else:
    # for saliency purpose
    return np.abs(S) ** 2
```

The invention and preferred embodiments are defined by the appended claims.

## Claims

1. A method for identifying one or more root cause Key Performance Indicators, KPIs, of an anomalous incident in a system, the anomalous incident being associated with a primary KPI, the method comprising:

   selecting a plurality of time sequences of secondary KPIs of the system;
   calculating, by a processor (104A-N), a spectral saliency of a time sequence of the primary KPI and of each secondary KPI time sequence;
   calculating, by a processor (104A-N), based on the spectral saliencies, similarities between the time sequence of the primary KPI and each secondary KPI time sequence; and
   selecting one or more secondary KPIs having greatest similarity to the primary KPI as root cause KPIs.

2. The method of claim 1, wherein the spectral saliency of each KPI time sequence is calculated by initially applying a discrete Fourier Transform to time series data of the respective KPI to generate a phase spectrum $P(f)$, and then calculating an inverse discrete Fourier transform of the phase spectrum.

3. The method of claim 2, the method further comprising applying a linear transformation to each KPI time series so that start and end values of that KPI time series are equal before calculating the discrete Fourier transform of that time series.

4. The method of claim 3, the method further comprising adding extra data points to conclude each time sequence and creating an extended time sequence, prior to applying the linear transformation to the time series data of the extended time sequence.

5. The method of claim 4, wherein the extra data points are estimated based on a gradient of a last portion of the time sequence to form the extended time sequence in which the extra data points form a smooth continuation of the time sequence as it was before the extra data points were added.

6. The method according to any one of the preceding claims, wherein, in selecting the plurality of secondary KPIs, secondary KPIs of low amplitude are discarded.

7. The method according to any one of the preceding claims, wherein the similarities between the primary KPI time sequence and each of the secondary KPI time sequences are calculated using a time-lagged cross-correlation.

8. The method according to any one of the preceding claims, wherein the method is repeated for one or more different primary KPIs.

9. The method according to any one of the preceding claims, wherein the method is applied to a communication system or to a system of computing devices.

10. The method according to any one of claims 1 to 8, wherein the method is applied to an industrial system.

11. An apparatus (102) for identifying a root cause KPI of an anomalous incident, the apparatus (102) comprising:

   one or more processors (104A-N); and
   one or more computer-readable storage devices (106A-N) having stored thereon computer-executable instructions that are executable by the one or more processors (104A-N) and that cause the apparatus to perform the method according to any one of claims 1 to 10.

12. A computer program for identifying a root cause KPI of an anomalous incident in a system, the anomalous incident being associated with a primary KPI, the computer program comprising:
   one or more non-transitory computer-readable storage devices (106A-N) and a plurality of program instructions stored on at least one of the one or more computer-readable storage devices (106A-N), the plurality of program instructions comprising:

   program instructions to select a plurality of time sequences of secondary KPIs of the system;
   program instructions to calculate, by a processor (104A-N), a spectral saliency of a time sequence of the primary KPI and of the time sequences of each secondary KPI;
   program instructions to calculate, by a processor (104A-N), based on the spectral saliencies, similarities between the time sequence of the primary KPI and each secondary KPI time sequence; and
   program instructions to select one or more secondary KPIs having greatest similarity to the primary KPI as root cause KPIs.

13. A non-transitory computer-readable medium storing executable instructions for identifying one or more root cause Key Performance Indicators, KPIs, of an anomalous incident in a system, the anomalous incident being associated with a primary KPI, wherein the executable instruction, when executed by a processor (104A-N), cause the processor (104A-N) to perform the method according to any one of claims 1 to 10.

**Patentansprüche**

1. Verfahren zum Identifizieren einer oder mehrerer Leistungskennzahlen, KPIs, einer Grundursache eines anomalen Vorfalls in einem System, wobei der anomale Vorfall einer primären KPI zugeordnet ist, wobei das Verfahren umfasst:

   Auswählen einer Vielzahl von Zeitsequenzen von sekundären KPIs des Systems;
   Berechnen, durch einen Prozessor (104A-N), einer spektralen Salienz einer Zeitsequenz der primären KPI und jeder Zeitsequenz der sekundären KPI;
   Berechnen, durch einen Prozessor (104A-N), basierend auf den spektralen Salienzen, von Ähnlichkeiten zwischen der Zeitsequenz der primären KPI und jeder Zeitsequenz der sekundären KPI; und
   Auswählen einer oder mehrerer sekundärer KPIs, die eine größte Ähnlichkeit zu der primären KPI aufweisen, als KPIs der Grundursache.

2. Verfahren nach Anspruch 1, wobei die spektrale Salienz jeder KPI-Zeitsequenz durch anfängliches Anwenden einer diskreten Fourier-Transformation auf Zeitreihendaten der jeweiligen KPI, um ein Phasenspektrum $P(f)$ zu erzeugen, und dann Berechnen einer inversen diskreten Fourier-Transformation des Phasenspektrums berechnet wird.

3. Verfahren nach Anspruch 2, wobei das Verfahren ferner das Anwenden einer linearen Transformation auf jede KPI-Zeitreihe umfasst, sodass Start- und Endwerte dieser KPI-Zeitreihe vor dem Berechnen der diskreten Fourier-Transformation dieser Zeitreihe gleich sind.

4. Verfahren nach Anspruch 3, wobei das Verfahren ferner ein Hinzufügen zusätzlicher Datenpunkte, um jede Zeitsequenz abzuschließen, und ein Erstellen einer erweiterten Zeitsequenz vor dem Anwenden der linearen Transformation auf die Zeitreihendaten der erweiterten Zeitsequenz umfasst.

5. Verfahren nach Anspruch 4, wobei die zusätzlichen Datenpunkte basierend auf einem Gradienten eines letzten Abschnitts der Zeitsequenz geschätzt werden, um die erweiterte Zeitsequenz zu bilden, in der die zusätzlichen Datenpunkte eine glatte Fortsetzung der Zeitsequenz, wie sie war, bevor die zusätzlichen Datenpunkte hinzugefügt wurden, bilden.

6. Verfahren nach einem der vorstehenden Ansprüche, wobei, bei einem Auswählen der Vielzahl von sekundären KPIs, sekundäre KPIs mit geringer Amplitude verworfen werden.

7. Verfahren nach einem der vorstehenden Ansprüche, wobei die Ähnlichkeiten zwischen der Zeitsequenz der primären KPI und jeder der Zeitsequenzen der sekundären KPI unter Verwendung einer zeitverzögerten Kreuzkorrelation berechnet werden.

8. Verfahren nach einem der vorstehenden Ansprüche, wobei das Verfahren für eine oder mehrere verschiedene primäre KPIs wiederholt wird.

9. Verfahren nach einem der vorstehenden Ansprüche, wobei das Verfahren auf ein Kommunikationssystem oder auf ein System von Rechenvorrichtungen angewendet wird.

10. Verfahren nach einem der Ansprüche 1 bis 8, wobei das Verfahren auf ein Industriesystem angewendet wird.

11. Einrichtung (102) zum Identifizieren einer KPI der Grundursache eines anomalen Vorfalls, wobei die Einrichtung (102) umfasst:

   einen oder mehrere Prozessoren (104A-N); und
   eine oder mehrere computerlesbare Speichervorrichtungen (106A-N), die darauf gespeicherte computerausführbare Anweisungen aufweisen, die durch den einen oder die mehreren Prozessoren (104A-N) ausführbar sind und die die Einrichtung veranlassen, das Verfahren nach einem der Ansprüche 1 bis 10 durchzuführen.

12. Computerprogramm zum Identifizieren einer KPI der Grundursache eines anomalen Vorfalls in einem System, wobei der anomale Vorfall einer primären KPI zugeordnet ist, wobei das Computerprogramm umfasst:
   eine oder mehrere nichtflüchtige computerlesbare Speichervorrichtungen (106A-N) und eine Vielzahl von Programmanweisungen, die auf mindestens einer der einen oder der mehreren computerlesbaren Speichervorrichtungen (106A-N) gespeichert ist, wobei die Vielzahl von Programmanweisungen umfasst:

   Programmanweisungen, um eine Vielzahl von Zeitsequenzen sekundärer KPIs des Systems auszuwählen;
   Programmanweisungen, um, durch einen Prozessor (104A-N), eine spektrale Salienz einer Zeitsequenz der primären KPI und der Zeitsequenzen jeder sekundären KPI zu berechnen;
   Programmanweisungen, um, durch einen Prozessor (104A-N), basierend auf den spektralen Salienzen, Ähnlichkeiten zwischen der Zeitsequenz der primären KPI und jeder Zeitsequenz der sekundären KPI zu berechnen; und
   Programmanweisungen, um eine oder mehrere sekundäre KPIs, die die größte Ähnlichkeit zu der primären KPI aufweisen, als KPIs der Grundursache auszuwählen.

13. Nichtflüchtiges computerlesbares Medium, das ausführbare Anweisungen zum Identifizieren einer oder mehrerer Leistungskennzahlen, KPIs, der Grundursache eines anomalen Vorfalls in einem System speichert, wobei der anomale Vorfall einer primären KPI zugeordnet ist, wobei die ausführbaren Anweisungen, wenn sie durch einen Prozessor (104A-N) ausgeführt werden, den Prozessor (104A-N) veranlassen, das Verfahren nach einem der Ansprüche 1 bis 10 durchzuführen.

**Revendications**

1. Procédé permettant d'identifier un ou plusieurs indicateurs clés de performance, ICP, de cause profonde d'un incident anormal dans un système, l'incident anormal étant associé à un ICP primaire, le procédé comprenant :

   la sélection d'une pluralité de séquences temporelles d'ICP secondaires du système ;
   le calcul, par un processeur (104A-N), d'une saillance spectrale d'une séquence temporelle de l'ICP primaire et de chaque séquence temporelle d'ICP secondaire ;
   le calcul, par un processeur (104 A-N), sur la base des saillances spectrales, de similitudes entre la séquence temporelle de l'ICP primaire et chaque séquence temporelle d'ICP secondaire ; et
   la sélection d'un ou plusieurs ICP secondaires ayant la plus grande similarité avec l'ICP primaire en tant qu'ICP de cause profonde.

2. Procédé selon la revendication 1, dans lequel la saillance spectrale de chaque séquence temporelle d'ICP est calculée en appliquant initialement une transformée de Fourier discrète aux données de série temporelle de l'ICP respectif pour générer un spectre de phase $P(f)$, puis en calculant une transformée de Fourier discrète inverse du spectre de phase.

3. Procédé selon la revendication 2, le procédé comprenant en outre l'application d'une transformation linéaire à chaque série temporelle d'ICP de sorte que des valeurs de début et de fin de cette série temporelle d'ICP sont égales avant de calculer la transformée de Fourier discrète de cette série temporelle.

4. Procédé selon la revendication 3, le procédé comprenant en outre l'ajout de points de données supplémentaires pour conclure chaque séquence temporelle et la création d'une séquence temporelle étendue, avant d'appliquer la transformation linéaire aux données de série temporelle de la séquence temporelle étendue.

5. Procédé selon la revendication 4, dans lequel les points de données supplémentaires sont estimés sur la base d'un gradient d'une dernière partie de la séquence temporelle pour former la séquence temporelle étendue dans laquelle les points de données supplémentaires forment une continuation lisse de la séquence temporelle telle qu'elle était avant l'ajout des points de données supplémentaires.

6. Procédé selon l'une quelconque des revendications précédentes, dans lequel, lors de la sélection de la pluralité d'ICP secondaires, des ICP secondaires de faible amplitude sont écartés.

7. Procédé selon l'une quelconque des revendications précédentes, dans lequel les similitudes entre la séquence temporelle d'ICP primaire et chacune des séquences temporelles d'ICP secondaires sont calculées à l'aide d'une corrélation croisée avec décalage temporel.

8. Procédé selon l'une quelconque des revendications précédentes, dans lequel le procédé est répété pour un ou plusieurs ICP primaires différents.

9. Procédé selon l'une quelconque des revendications précédentes, dans lequel le procédé est appliqué à un système de communication ou à un système de dispositifs informatiques.

10. Procédé selon l'une quelconque des revendications 1 à 8, dans lequel le procédé est appliqué à un système industriel.

11. Appareil (102) permettant d'identifier un ICP de cause profonde d'un incident anormal, l'appareil (102) comprenant :

    un ou plusieurs processeurs (104A-N) ; et
    un ou plusieurs dispositifs de stockage lisibles par ordinateur (106A-N) sur lesquels sont stockées des instructions exécutables par ordinateur qui sont exécutables par le ou les processeurs (104A-N) et qui amènent l'appareil à effectuer le procédé selon l'une quelconque des revendications 1 à 10.

12. Programme informatique permettant d'identifier un ICP de cause profonde d'un incident anormal dans un système, l'incident anormal étant associé à un ICP primaire, le programme informatique comprenant :
un ou plusieurs dispositifs de stockage non transitoire lisible par ordinateur (106A-N) et
une pluralité d'instructions de programme stockées sur au moins l'un parmi le ou les dispositifs de stockage lisible par ordinateur (106A-N), la pluralité d'instructions de programme comprenant :

des instructions de programme pour sélectionner une pluralité de séquences temporelles d'ICP secondaires du système ;
des instructions de programme pour calculer, par un processeur (104A-N), une saillance spectrale d'une séquence temporelle de l'ICP primaire et des séquences temporelles de chaque ICP secondaire ;
des instructions de programme pour calculer, par un processeur (104A-N), sur la base des saillances spectrales, des similitudes entre la séquence temporelle de l'ICP primaire et chaque séquence temporelle d'ICP secondaire ; et
des instructions de programme pour sélectionner un ou plusieurs ICP secondaires ayant la plus grande similarité avec l'ICP primaire en tant qu'ICP de cause profonde.

13. Support non transitoire lisible par ordinateur stockant des instructions exécutables permettant d'identifier un ou plusieurs indicateurs clés de performance, ICP, de cause profonde d'un incident anormal dans un système, l'incident anormal étant associé à un ICP primaire, dans lequel l'instruction exécutable, lorsqu'elle est exécutée par un processeur (104A-N), amène le processeur (104A-N) à réaliser le procédé selon l'une quelconque des revendications 1 à 10.

104A
106A

102

FIRST PROCESSOR ↔ FIRST COMPUTER-READABLE STORAGE DEVICE

Nth PROCESSOR ↔ Nth COMPUTER-READABLE STORAGE DEVICE

104N
106N

100

**FIG.1**

KPI DATA SET

202

DATA PRE-PROCESSING
OPERATION

204

KPI CORRELATION
OPERATION

208

FLUCTUATION FEATURE
EXTRACTION
OPERATION

206

SCORING AND
RANKING
OPERATION

210

**FIG. 2**

**FIG. 3A**

**FIG. 3B**

**FIG. 4A**

**FIG. 4B**

504

506

**FIG. 5A**

512

510A

510N

**FIG. 5B**

516

506

**FIG. 5C**

512

**FIG. 5D**

FIG. 6A

FIG. 6C

FIG. 6B

FIG. 6D

**FIG. 6E**

**FIG. 6G**

**FIG. 6F**

**FIG. 6H**

FIG. 7A

FIG. 7B

FIG. 7C

FIG. 7D

FIG. 7E

**FIG. 7F**

**FIG. 7G**

**FIG. 7H**

**FIG. 7I**

SELECTING A PLURALITY OF TIME SEQUENCES OF
SECONDARY KPIS OF A SYSTEM

802

CALCULATING A SPECTRAL SALIENCY OF A TIME
SEQUENCE OF A PRIMARY KPI AND OF EACH SECONDARY
KPI TIME SEQUENCE BY A PROCESSOR

804

**A**

**FIG. 8A**

A

CALCULATING SIMILARITIES BETWEEN THE TIME
SEQUENCE OF THE PRIMARY KPI AND EACH SECONDARY
KPI TIME SEQUENCE BASED ON THE SPECTRAL SALIENCIES
BY THE PROCESSOR

806

SELECTING ONE OR MORE SECONDARY KPIS HAVING
GREATEST SIMILARITY TO THE PRIMARY KPI AS ROOT
CAUSE KPI'S

808

**FIG. 8B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160320768 A1

**Non-patent literature cited in the description**

- Spatio-temporal Saliency detection using phase spectrum of quaternion fourier transform. **CHENLEI GUO et al.** COMPUTER VISION AND PATTERN RECOGNITION, 2008. CVPR 2008. IEEE CONFERENCE ON. IEEE, 23 June 2008, 1-8